# EUROPEAN PATENT APPLICATION

(11) **EP 3 079 372 A1**
(43) Date of publication of application: **12.10.2016**
(21) Application number: 15305538.9
(22) Date of filing: 10.04.2015
(51) Int. Cl.: H04N 21/41, H04N 21/422, H04N 21/436, H04N 21/439, H04N 21/4402, H04N 21/442, H04N 21/458, H04N 21/485, H04N 5/44

(54) **TV CONTROL BY NATURAL LANGUAGE INPUT**

(71) Applicant: Thomson Licensing, 92130 Issy-les-Moulineaux (FR)
(72) Inventor: Keller, Anton Werner, 8905 Arni (CH); Clevenger, Brian Duane, Muncie, IN Indiana 47304 (US)
(74) Representative: Huchet, Anne

(57) **Abstract**

A particular implementation receives text from a user in the form of natural language that can be a command for a connected device. The natural language is parsed and sent to a translator to generate control information for a device based on the natural language command. Another embodiment detects devices connected to a controller, obtains control and programming information for those devices, and then translates a command into a series of commands for any or all connected devices. This command can be in the form of a simple natural language command that generates the series of subcommands to the various connected devices.

## Description

### TECHNICAL FIELD

The present principles relate generally to methods and apparatus for controlling a television and connected devices by use of natural language text or voice.

### BACKGROUND

The functions of a TV and surrounding equipment have traditionally been controlled separately, independently and by use of various menu structures. The menu structures are typically technically oriented, and are often tedious, time-consuming and complex to operate. In most digital cable television systems, there are so many channels that programming a digital television can become overwhelming. In addition, control of peripheral devices, such as audio and lighting, must be done separately.

### SUMMARY

These and other drawbacks and disadvantages of the prior art are addressed by various described embodiments, which are directed to methods and apparatus for controlling a television and connected devices by use of natural language text or voice.

According to one general aspect, a method is provided for controlling a device. The method comprises receiving input from a user, parsing the input to determine key words corresponding to device commands, and translating the key words to control the device.

According to another general aspect, an apparatus is provided for controlling a device. The apparatus comprises a receiver of text input. The text could be typed by a user, copied from some location, or generated through a speech-to-text converter. The apparatus also comprises a processor, which can further comprise a parsing engine operating on the text input to generate an output. The processor can also comprise an artificial intelligence engine operating the output of the parsing engine to generate information to control a device.

According to another general aspect, a second method is provided for discovery and control of devices. The method comprises detecting at least one device to be controlled. The method further comprises obtaining control information about the at least one device, obtaining rules for controlling the at least one device, obtaining control information about a combination of such devices, and obtaining rules for controlling the combination of devices. The method further comprises configuring a controller to control at least one of the devices based on the control information and rules.

According to another general aspect, a second apparatus is provided for discovery and control of devices. The apparatus comprises a detector which is used to detect at least one device to be controlled. The apparatus also comprises a communication interface that is used to obtain information and control rules for the at least one device to be controlled. The apparatus further comprises a process to control at least one of the devices based on the control information and rules.

The details of one or more implementations are set forth in the accompanying drawings and the description below. Even if described in one particular manner, it should be clear that implementations can be configured or embodied in various manners. For example, an implementation can be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

### BRIEF DESCRIPTION OF THE DRAWINGS

The present principles can be better understood in accordance with the following exemplary figures, in which:
Figure 1 shows a multimedia system including connected devices.
Figure 2 shows a text command plane for entering input according to an embodiment of the present principles.
Figure 3 shows a command editor interface according to an embodiment of the present principles.
Figure 4 shows an internal block diagram of a typical digital television.
Figure 5 shows one embodiment of a method according to an embodiment of the present principles.

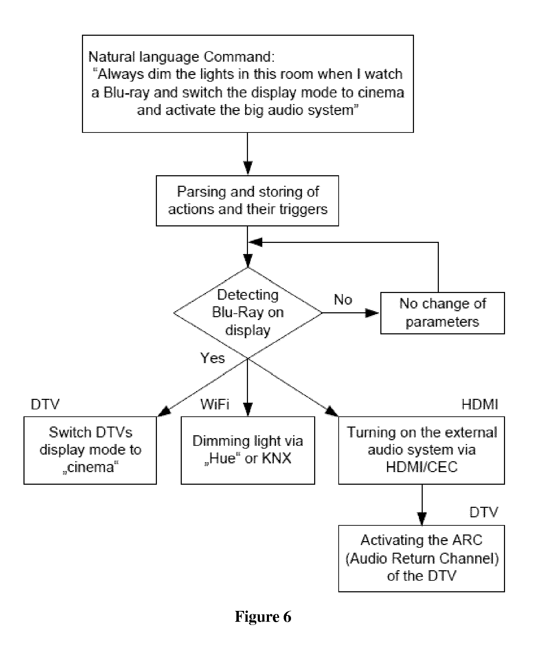

Figure 6 shows a flow diagram of one embodiment according to an embodiment of the present principles.
Figure 7 shows the system of Figure 1 with a new device for potential connection.

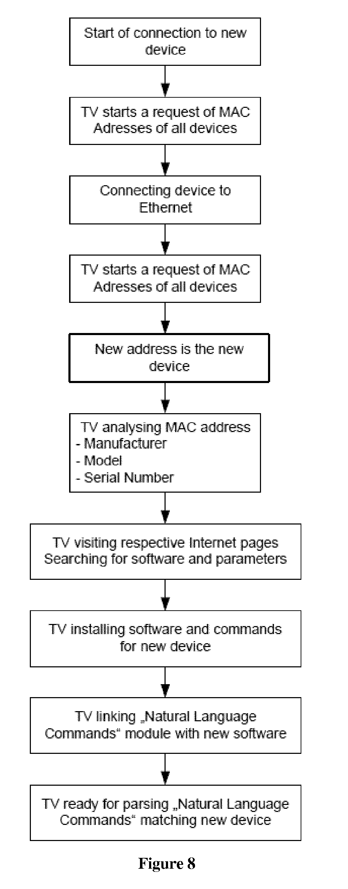

Figure 8 shows a flow diagram of another embodiment according to an embodiment of the present principles.
Figure 9 shows one embodiment of a method according to an embodiment of the present principles.
Figure 10 shows one embodiment of an apparatus according to an embodiment of the present principles.
Figure 11 shows another embodiment of a method according to an embodiment of the present principles.
Figure 12 shows another embodiment of an apparatus according to an embodiment of the present principles.
Figure 13 shows an additional embodiment of the apparatus of Figure 12 according to an embodiment of the present principles.

### DETAILED DESCRIPTION

The described embodiments are directed to methods and apparatus for controlling a television and connected devices by use of natural language text or voice.

There are several prior methods for natural language processing systems.

A first prior art approach is ELIZA developed at MIT, which simulated artificial intelligence. Prior systems such as this only tried to mimic human interaction without actually trying to understand what the user was saying.

Another early example of a natural language processing system was Microsoft's Clippy. However, this system used keywords from a user's questions to search pre-defined help and wizard content instead of providing interactive responses.

More recent examples are systems like SIRI that mimic artificial intelligence and provide an interactive response. In SIRI's case, it responds with voice instead of text. However, these systems run in larger computing environments in the cloud, not on an embedded device.

As mentioned, the present invention relates to control of a television and connected devices by use of natural language text or voice. This invention extends the functionality of controlling a television beyond simple functions like "next channel" or "increase volume." Instead, the present principles can be used, for example, for programming 100 channels or controlling tasks that concern the cooperation of different home cinema devices being controlled via a bus structure, such as Consumer Electronic Control (CEC).

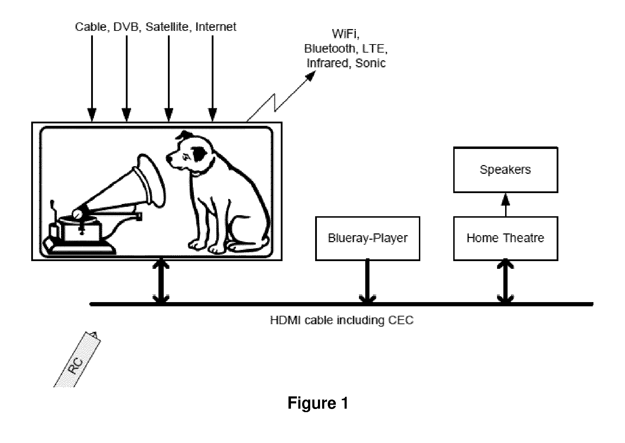

In many digital televisions, programming of functions is implemented by use of menus, many of which are nested hierarchically. If a user wants to control a number of multimedia devices, in addition to lighting and other devices, it would normally require a large number of difficult commands and different steps in numerous menus, and with various devices. Figure 1 depicts a simple home cinema system containing a Blu-ray player, a home cinema audio station and a digital TV with a remote control.

Many of the latest consumer electronic devices are "smart" devices, in that they have Internet capabilities, with search engines and email facilities. These devices can have an input device, such as a keyboard or iPad, for example, that is capable of entering text quickly. Some offer a Bluetooth connection for the use of a Bluetooth keyboard. The present principles work well with a keyboard, but do not rely on a keyboard being used. Text to speech recognition systems or predefined text, such as from the Internet, for example, can be used to input commands under the present principles.

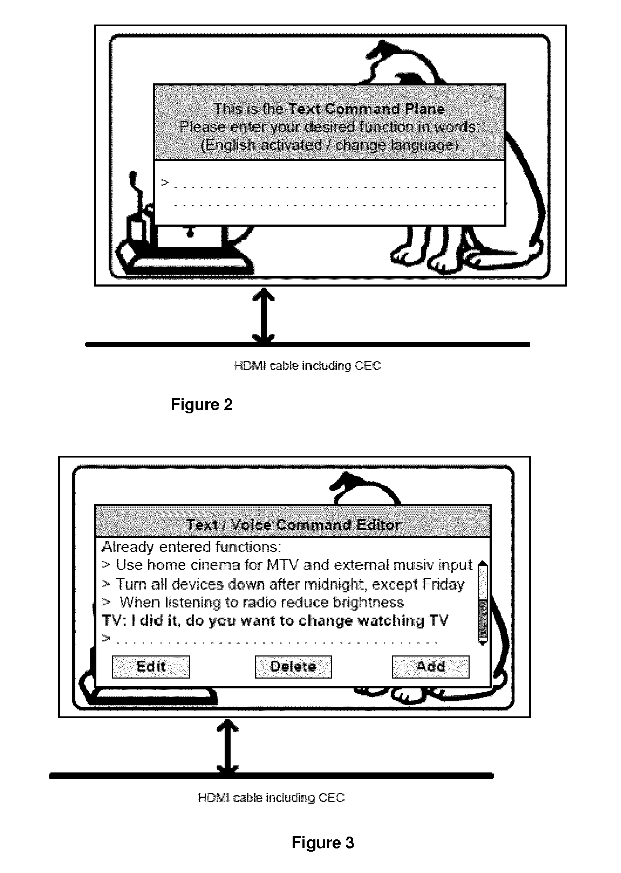

In one embodiment of the present principles, a television can display a simple user interface, allowing the user to input text, or use speech with a speech recognition system, to enter commands as shown in Figure 2.

Figure 3 shows a screen for editing existing command statements. A television can ask for particular jobs that should be done or for precise requests by a user.

An example of the process implemented by this embodiment is that a user enters a written command statement (or spoken and converted to text by a speech to text module): "Always use the home cinema amplifier speaker for TV."

The digital television (DTV) analyzes this statement and parses it into its own commands:
- check all hardware required
- activating HDMI and ARC (ARC=Audio Return Channel)
- initiating the standby/run control of the external amplifier

An analysis of the text of the following commands and their subsequent parsing must produce similar resulting control signals to be executed when the DTV is used:
"Always use the home cinema amplifier speaker for TV."
"Use home cinema for music."
"Use always ARC."

So, a user can use phrases of similar meaning, and the system utilizing the present principles will interpret the phrases in the same way, and execute a series of sub-commands controlling the television and associated devices.

A more complex command statement of a user can be: "Always use the home cinema amplifier for MTV." A DTV can analyze this command statement and parse it into its own commands as shown in the previous example, but makes a new connection between the program identifier or channel for turning on the external amplifier (by CEC) using ARC.

Another example is the command statement: "Always use the home cinema amplifier speaker for TV, but do use the TV speakers for the news." The DTV can analyze this command and parse it into its own commands as above, but makes a new connection between the program content (indicated in the transport stream).

Another example of use of the present principles is a situation when a satellite TV user attempts to tune and edit a large number of satellite channels, sorted by name or by channel number. Some are scrambled, some are data channels, and some are radio channels. A user would like a simplified way to execute a number of specific tasks related to the channels, such as:

| **source** | **command** |
|---|---|
| user | Scan all digital channels |
| TV | Do you want to save previous settings yes / no |
| user | Yes, delete them |
| TV | I found 998 channels, 800 TV, 190 Radio and 10 for data |
| | Please, eliminate all non-TV channels and all scrambled TV channels |
| TV | I found 150 unscrambled TV channels, |
| TV | Do you want to sort them, I propose the use of Favorites |
| user | Take all those in my Favorites "A" that are in English |
| user | Take all those in my Favorites "B" that are in Spanish |
| user | Take all channels that are not in my Favorites "A" or "B" into my Favorites "C" |
| user | Range the my Favorites "B" or "C" alphabetically |
| user | Range the my Favorites "A" and put channel "TNXY" on the first position |
| user | Put channel "WWXY" on the second position |
| user | Please observe my use of channels in Favorites "B" and range them by use-time |

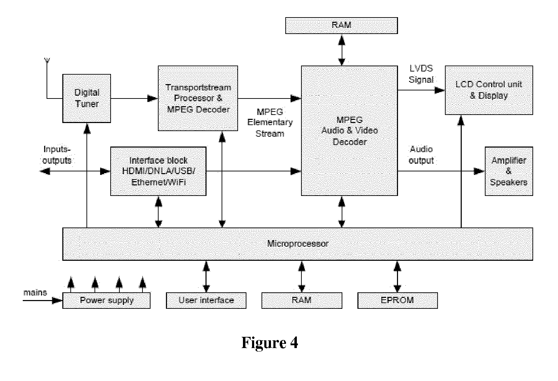

Figure 4 shows a block diagram of a digital television. The digital television comprises a digital tuner, transport stream processor and MPEG decoder, MPEG Audio and Video Decoder, LCD control unit & display, amplifier and speakers, RAM (for the video processing (external RAM and for the program of the microcomputer (often embedded RAM), EPROM for keeping the software and data for the microprocessor as well as other components, user interface (control buttons or other inputs camera, micro etc.), power supply, and interface block (dealing with all external devices connected, could be partly embedded with the microprocessor).

Many of these functions can be implemented with software by the microprocessor, or embedded in dedicated integrated circuits. One such dedicated circuit could be used for implementing natural language processing, according to the embodiments described herein.

When a user enters natural language text in the text command plane of Figures 2 and 3, this command statement can be sent to the microprocessor and can be processed by an Al (artificial intelligence) engine. The core of the Al system is a parser that understands words (and their synonyms) and the syntax of the language used. The parser is able to suppress filling-words and transform the written (or speech-to-text) commands into control signals, for example, machine code or settings of the DTV. The control signals are stored in the DTV so as to not have to parse the commands of the process after each start up. An appropriate parsing process, such as one that can be used in this process, is the subject of application 62/014433.

In a DTV with Internet connectivity, the parser can be "in the cloud" on a manufacturers support page or an independent cloud space. In another embodiment, a basic parsing could be done on the DTV side and the cloud can be used for more complicated jobs or language structures. The input in Figure 2 is transported to a manufacturer's side and translated into control signals for that DTV. The command script does not only contain commands from the DTV menu, but also commands controlling connected devices by use of the CEC bus via HDMI (High Definition Multimedia Interface) concerning devices connected to the DTV by a bus, such as a Blu-ray player, home theater or speakers. Other connections to further devices are depicted by the flash arrow in Figure 1, labelled "WiFi, Bluetooth, LTE, Infrared, Sonic".

In another embodiment, external devices can be controlled through the DTV. For example, if a sonic audio connected device receives a signal instructing it to perform some function initiated by a user through a DTV, the device can respond because the system using the present principles has converted a natural language command statement into control signals recognizable by the connected device. The device will respond, based on the input command statement.

In another embodiment, control of external lighting, via a WiFi connection, for example, can be implemented as part of a natural language command to a DTV. For example, if a user wants lighting to be dimmed while watching romantic movies, the parser can recognize information in the electronic program guide that characterizes a particular movie as romantic, and then send commands via WiFi to the lighting to control their brightness. This idea can be extended by issuing the command statement to "always dim the lights when I watch a Blu-ray disc." When one or more external devices are connected via HDMI bus to the DTV and other external devices, such as the lighting, have a connection to the DTV (via WiFi in this case), then the DTV can implement commands such as "always dim the lights in this room when I watch a Blu-ray disc and switch the display mode to cinema." In this case, besides adjusting the lighting via a WiFi connection, the DTV adjusts its own signal processing to cinema mode.

A cloud-supported parsing approach has the advantage that manufacturers will better understand user needs and can improve the parsing software, which can be downloaded to the DTV for fast local parsing. A manufacturer will be able to implement new functions based on the user commands detected.

When the system cannot fully understand a command statement, it can offer options, such as "Do you mean...." and offer suggested options. If devices are requested to respond to a command statement and these devices do not exist, the DTV states this and proposes a best-match alternative (based on manufacturer or function). This information can be derived either from a local memory or from the Internet. The Internet option can go as far as displaying a prospectus, technical information, vendor information, or an order form. If the parser does not find any solution, it asks the user to redefine his command, and if still unsuccessful, can state that the command cannot be completed.

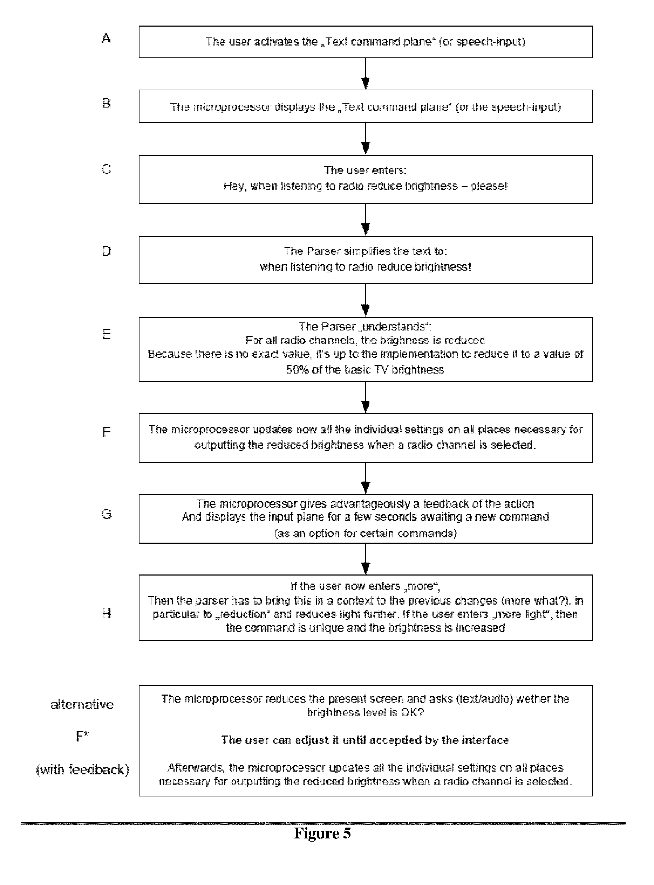

Figure 5 shows one embodiment of a method for entering an input command statement. Block H of Figure 5 is an example of understanding a natural language command, based on the output of previous block G. On the bottom of Figure 5 is an alternative block for block F (F*) for receiving a command, understanding the command, asking for the amount of correction and then applying the command to several channels.

The parser must have a relatively large word database. This database can be supported by the web or by asking the user for alternatives. As an example of increasing the TVs brightness, a command language can typically only allow parsing of: "TV brighter", "brighter", and "increase brightness". Using the natural language approach described here would additionally allow using "make the picture brighter", "more brilliant" "lighter", or something else along these lines, thus using all the synonyms or descriptions of "turn up the light", or saying the inverse, "the picture is to dark".

A word can also have different meanings based on syntax of the text. The previous example of "the picture is too dark" could be interpreted in a number of different ways. A simple interpretation would only understand the dark and maybe reduce brightness. But by correctly parsing the sequence of words, it is clear that the picture is too dark to the viewer and that he would like to increase its brightness.

Therefore, use of the present principles enables commands in natural language to start a script like function working on different channels or adjusting different parameters in harmony.

Additional embodiments of the present principles enable control of other connected devices via an HDMI bus, WiFi or Bluetooth using a single command that begins a script of lower level commands native to each affected device. As in the foregoing examples, the command can be in natural language form so that the embodiments described for that context can be used in conjunction with these embodiments. Resolution of conflicting commands involves prioritization of the command statements, such as giving priority based on the input order of the commands, for example, the latest command is strongest. In addition, alerts should be given followed by additional questions, when commands cannot be executed, or are in opposition to other portions of the commands. A user should also be given an opportunity to edit his or her choices at one or more points during execution of the top level command statement.

In an additional embodiment of the present principles, a number of devices can be connected in some way to the central control device. The central control device in most of the discussion so far has been the DTV, although a tablet, PC or smartphone can also be the control device. The devices can be connected via an HDMI bus, WiFi, Bluetooth, or in some other way to the control device.

When a user connects a new device to the central control device, the system must know the elementary commands available for the new device. In this way, when a general command statement is made, the processing of the natural language Al engine must know what commands to convert the general command statement into. For example, a user has a home theater with a DTV connected to a Blu-Ray player, a home cinema amplifier and speaker, and a satellite box. A smart lighting package is purchased to be used in a home theater environment. The previously entered command is "Always use the home cinema amplifier speaker for TV." Now, with the newly installed smart lighting, the user wants to also dim the lights when this command is entered. The user programs a command, "Always use the home cinema amplifier speaker for TV, and dim the lights."

The parser in the Al engine must know that there is a smart lighting package connected to the system, and what sub-commands will implement dimming of the lights. In order to learn what devices have been connected to the system, and learn what commands are available for the new device, the system under the present principles must acquire identification and programming information on that new device. Then the parser can turn the command statement into sub-commands for the new device in order to effectuate the function requested.

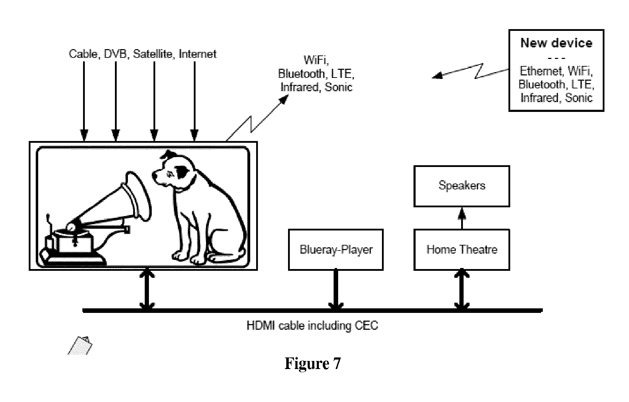

Figure 7 shows the system of Figure 1 with the addition of a new device, such as a smart lighting device, connected via HDMI, Ethernet, WiFi, Bluetooth, LTE, Infrared or Sonic connection, for example. Other devices in the system, such as the Blu-ray player and home theater system with speakers are shown connected to the DTV via an HDMI cable, but the present principles apply to other types of connections as well.

Identification of the new device, in this example the new smart lighting, can be performed by using the MAC (Media Access Control) address of the new device. The MAC address can be read out easily by connecting and reading out the header of the Ethernet exchange. The MAC of the target hardware is to be found in the Address Resolution Protocol (ARP) packet of the stream. The MAC address is a 48-bit or EUI-64 (Extended Unique Identifier, an IEEE trademarked name) value assigned by a manufacturer, and describes the type of product and the name of the manufacturer.

With this information derived from the MAC address, the DTV searches the web for the manufacturer and the device for grabbing the necessary application software and the command set. Alternately, a third party page can be accessed which contains similar information. Next, the set of commands is aligned with the natural language used in a command statement. It could be helpful for the user if a list of the new derived commands is displayed ante explained after the download or at least is available for display.

In one embodiment, there is a menu item in the DTV user interface for managing all the connected devices controlled by the DTV and displaying their command sets. Management of the connected devices comprises enabling, disabling, deleting, updating or other management of the device software.

When a new device is first connected to the controlling device (the DTV, for example), a connecting and accepting procedure can be followed. The controlling device is updated with a new device (as in Table 1) and a new set of commands related to control of the lighting (as in Table 2).

**Table 1**

| Device / Application | Device-name | Nature Languages Wordings |
|---|---|---|
| Hue Bridge (MAC address) and connected lamps | Hue, Lamp one, lamp two .... (could be renamed by Natural Language Commands) | Lamp one, Light, Light one, All Lamps Room Light(ing) |

**Table 2**

| Device-Function | Device-command in TV | Natural Languages Wordings |
|---|---|---|
| Lamp ON | Lamp ON | - Turn light one on |
| | | - Lamp one |
| | | - Switch lamp one |
| | | - Lamp one setting xxx |
| | | - All Lamps on |
| Lamp OFF | Lamp OFF | - Turn light one off |
| | | - Lamp one |
| | | - Switch lamp one |
| | | - All Light off |
| Dimming of Lamp | Lamp Dim | - Dim light one |
| | | - Lamp one reduce light |
| | | - Lamp one 50% |
| | | - Lamp one maximum |
| Varying Colour of Light | Lamp Colour | - Lamp one green/red/yellow |
| | | - Lamp one more green |
| | | - Lamp one less red |
| | | - Lamp one minimum |
| | | - Light one more yellow |

Tables 3 and 4 show example command creating sequences. Table 3 shows how to add a command to an existing command statement. The commands are entered via text, or speech-to-text.

**Table 3**

| **The natural language Command** | **Stored Action of TV (Commando central)** |
|---|---|
| TV I will create a new command. | TV goes into program mode |
| I call it "ROMANTIC SETTING". | TV detects that a setting is programmed and names it "ROMANTIC SETTING" |
| This command will reduce the audio level to 10 - no show me 10 (the TV adjusts the setting to 10) - no make audio level 8 (the TV adjusts the setting to 8) - yes that's fine and | TV knows that the Audio Level is part of the Setting. |
| | TV makes an example of the desired level 10 |
| | TV changes to level 8 |
| | TV stores level 8 for the "ROMANIC SETTING |
| close the curtains in all rooms - turn off all light except the "Corner-Lamp" ("Corner-Lamp" was defined earlier) on minimum level | TV adds the curtain-control to "close" |
| | TV turns off all the connected lights, except the "Corner Lamp" |
| turn on the electric candles in the shelf and lock the main door and put the phone in the quite mode. | TV set's the "Comer Lamp" to minimum level |
| | TV turns on the electric candles in the shelf |
| | TV locks the electric door lock |
| | TV puts the phone in quite mode |
| | TV remarks the stop of commands and closes the programming of "ROMANTIC SETTING" |
| I forgot; please add the music choice of "Romantic-Radio" in the "ROMANTIC SETTING". | |
| | TV opens the command and adds the choice of music-source to "Romantic-Radio" |
| | TV remarks the stop of commands and closes the programming of "ROMANTIC SETTING" |

Table 4 shows a command sequence that will randomly or systematically enable different devices to simulate the presence of an owner for an anti-theft application.

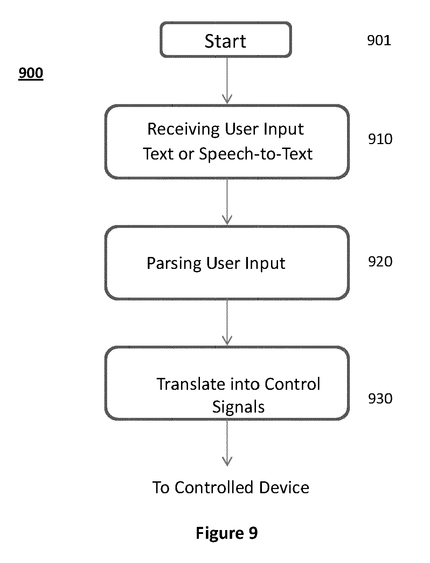

One embodiment of a method 900 for controlling a device is shown in Figure 9. The method commences at Start block 901 and control proceeds to block 910 for receiving user input by text or by speech-to-text. Control then proceeds to block 920 for parsing the user input. The parsing can determine some key words, for example, that will enable the system to determine which device should be controlled and what function will be performed. Control proceeds from block 920 to block 930 in which the parsed user input is translated into signals to control a particular desired device.

**Table 4**

| **The natural language Command** | **Stored Action of TV (Commando central)** |
|---|---|
| TV I will create a new command. | TV goes intro progam mode |
| I name it "GOOD MORNING". | TV detects that a setting is programmed and names it "GOOD MORNING". |
| Please turn on the News, preferred in German and Swiss-TV | TV stores "News" and will present in that mode News by checking the EPG. The news shall be in German and he will check first Swiss-TV |
| | TV programs the turn-on of the coffee machine |
| And do not forget the light in the kitchen and living room when the coffee is ready. | TV after a delay time the light is turned on |
| When leaving the house, please turn everything off | TV programs the door-lock as an input and will shut down everything |
| And activate the anti-burglar program | TV activates the anti-burglar program |
| | |
| | TV remarks the stop of commands and closes the programming of "GOOD MORNING". |

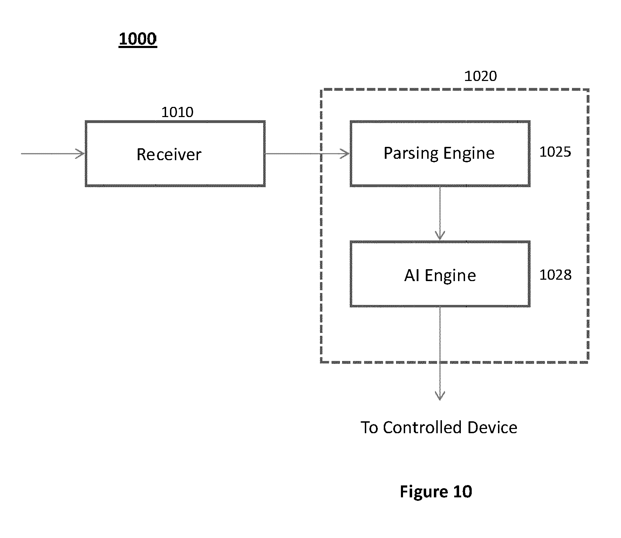

One embodiment of an apparatus 1000 for controlling a device is shown in Figure 10. The device comprises a Receiver 1010 which receives a text input from a user. The output of Receiver 1010 is in signal connectivity with module 1020, which can be implemented in a standalone unit, for example a processor, or with dedicated devices, such as Parsing Engine 1025 and Artificial Intelligence (AI) Engine 1028. The input from Receiver 1010 is in signal connectivity with Parsing Engine 1025, which as mentioned can be part of module 1020. Parsing Engine 1025 determines some key words, for example, that will enable the system to determine which device should be controlled and what function will be performed.

The output of Parsing Engine 1025 is in signal connectivity with the input to AI Engine 1028. AI Engine 1028 generates control information to at least one device based on the Parsing Engine 1025 output.

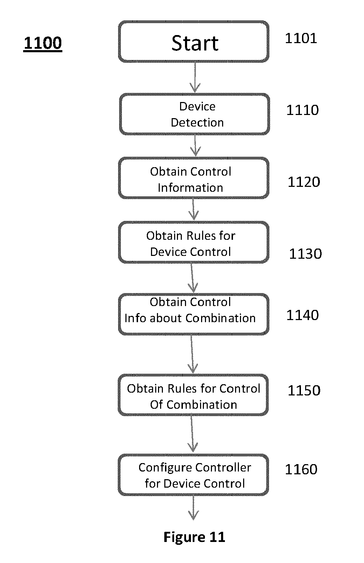

One embodiment of a method 1100 for discovery and control of devices through a controller is shown in Figure 11. The method commences at Start block 1101 and control proceeds to block 1110 for detecting at least one device to be controlled. Control proceeds from block 1110 to block 1120 for obtaining control information about the at least one device. This control information can be obtained through internet connectivity, for example, or through some other information database or communication interface. Control proceeds from block 1120 to block 1130 for obtaining rules for controlling the at least one device, through similar type of information database or communication interface. Control proceeds from block 1130 to block 1140 for obtaining control information about a combination of devices that comprise the system to be controlled. Control proceeds from block 1140 to block 1150 for obtaining rules for controlling the combination of devices. Control then proceeds from block 1150 to block 1160 for configuring the controller to control at least one of the devices based on the obtained control information and rules.

It should be noted that the procedure to obtain the information and control rules about the devices does not need to be carried out in the precise order just mentioned, however, and that these steps can be carried out in combined steps or in another order.

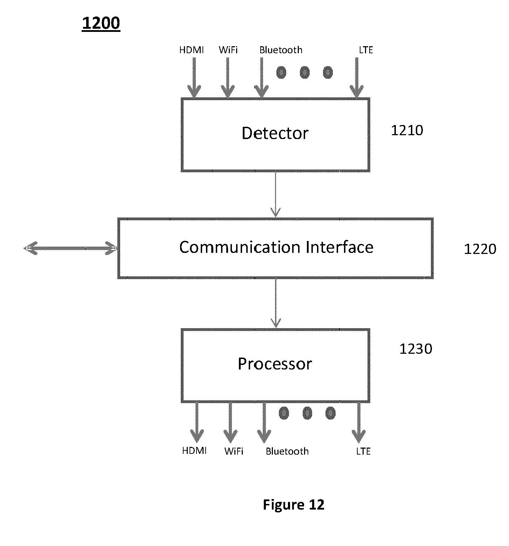

An embodiment of an apparatus 1200 for discovery and control of devices through a controller is shown in Figure 12. The apparatus comprises a Detector 1210 in signal connectivity with at least one interface which communicates with at least one device. The interface can be at least one of HDMI bus, WiFi, Bluetooth, LTE, or some other communication interface in which devices in the system communicate. The output of Detector 1210 is in signal communication with Communication Interface 1220, which has a bidirectional port for communicating with an information database, or with the internet, for example. Communication Interface 1220 uses this bidirectional port to look for and obtain information and control rules pertaining to the devices connected to Detector 1210. The output of Communication Interface 1220, representative of the obtained control rules and information, is in signal connectivity with the input to Processor 1230. Processor 1230 uses the control information and rules to send control information and rules to at least one selected device through its output.

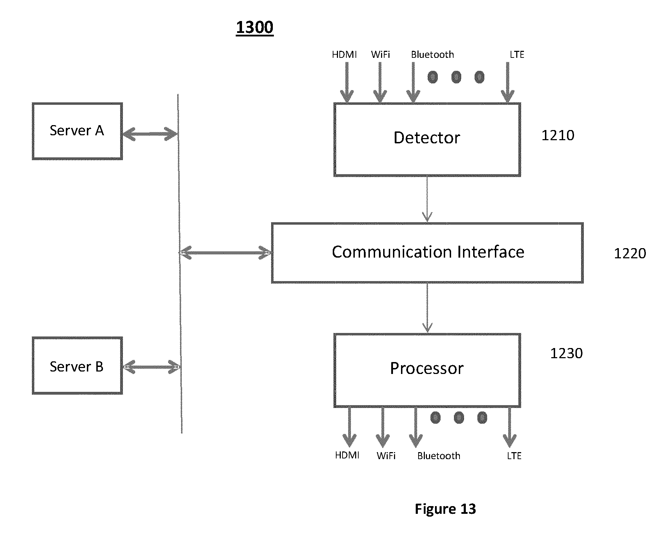

An additional embodiment to the previous system is shown in Figure 13, which shows the system of Figure 12, but the bidirectional port of Communication Interface 1220 interfaces with two servers, Server A and Server B. Servers A and B can be used in a way that device information is stored and rules for controlling that device are retrieved from Server A, while Server B can be used so that device information for another device is stored and rules for controlling that device can be retrieved from Server B by Communication Interface 1220.

The present description illustrates the present principles. It will thus be appreciated that those skilled in the art will be able to devise various arrangements that, although not explicitly described or shown herein, embody the present principles and are thereby included within the present principles.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as readily apparent by one of ordinary skill in this and related arts, for as many items listed.

These and other features and advantages of the present principles can be readily ascertained by one of ordinary skill in the pertinent art based on the teachings herein. It is to be understood that the teachings of the present principles can be implemented in various forms of hardware, software, firmware, special purpose processors, or combinations thereof.

Most preferably, the teachings of the present principles are implemented as a combination of hardware and software. Moreover, the software can be implemented as an application program tangibly embodied on a program storage unit. The application program can be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform can also include an operating system and microinstruction code. The various processes and functions described herein can be either part of the microinstruction code or part of the application program, or any combination thereof, which can be executed by a CPU. In addition, various other peripheral units can be connected to the computer platform such as an additional data storage unit and a printing unit.

It is to be further understood that, because some of the constituent system components and methods depicted in the accompanying drawings are preferably implemented in software, the actual connections between the system components or the process function blocks can differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications can be effected therein by one of ordinary skill in the pertinent art without departing from the scope of the present principles. All such changes and modifications are intended to be included within the scope of the present principles as set forth in the appended claims.

## Claims

1. A method for controlling a device, comprising:
receiving natural language input from a user, **characterized by**:
parsing the natural language input to determine key words corresponding to device commands; and,
translating the key words to control said device.

2. The method of Claim 1, wherein said device comprises a television, set top box, and audio receiver.

3. The method of Claim 1, further **characterized by** inputting said natural language input as verbal data or text data.

4. The method of Claim 1, further **characterized by** suppressing non-keywords when parsing.

5. The method of Claim 1, further **characterized by** making code to control device resident on said device.

6. An apparatus for controlling a device, comprising:
a receiver of natural language input; and,
a processor, **characterized by**:
a parsing engine operating on the natural language input to generate an output; and
an artificial intelligence engine operating the output of the parsing engine to generate information to control a device.

7. A method for discovery and control of devices comprising:
detecting at least one device to be controlled;
obtaining control information about the at least one device;
obtaining rules for controlling the at least one device; **characterized by**:
obtaining control information about a combination of such devices;
obtaining rules for controlling the combination of devices; and
configuring the controller to control at least one of the devices based on the control information and rules.

8. The method of claim 7, further **characterized by**:
sending device information to a first server and receiving the rules for controlling from the first server; and
sending the device information to a second server; and receiving second rules for controlling from the second server.

9. The method of Claim 7, further comprising:
receiving natural language input from a user; and further **characterized by**:
parsing the natural language input to determine key words corresponding to device commands; and,
translating the key words to control said device.

10. The method of claim 8, further **characterized by** the second rules enabling interaction between at least two devices.

11. The method of claim 8, further **characterized by** the second server receiving information from at least two devices.

12. An apparatus for discovery and control of devices through a controller, comprising:
a detector used to detect at least one device to be controlled;
**characterized by**:
a communication interface used to obtain control information, control rules, combination information, and control rules for a combination of detected devices; and,
a processor that controls at least one of the devices based on the control information and rules.
